# EUROPÄISCHE PATENTSCHRIFT

(11) **EP 3 548 319 B1**
(45) Veröffentlichungstag und Bekanntmachung des Hinweises auf die Patenterteilung: **23.12.2020**
(21) Anmeldenummer: 17801640.8
(22) Anmeldetag: 10.11.2017
(51) Int. Cl.: B60J 1/00, B60J 1/17

(54) **LAMINIERTE FAHRZEUG-SEITENSCHEIBE MIT EINER DURCHFÜHRUNG ZUR BEFESTIGUNG EINES KLEMMELEMENTS**
LAMINATED VEHICLE SIDE PANEL WITH A PASSAGE FOR FIXING A CLAMPING ELEMENT
VITRE LATÉRALE DE VÉHICULE STRATIFIÉE COMPRENANT UN PASSAGE DESTINÉ À FIXER UN ÉLÉMENT DE SERRAGE

(30) Priorität: 29.11.2016 EP 16201027
(43) Veröffentlichungstag der Anmeldung: 09.10.2019
(73) Patentinhaber: SAINT-GOBAIN GLASS FRANCE, 92400 Courbevoie (FR)
(72) Erfinder: UEBELACKER, Stefan, 52146 Würselen (DE)
(74) Vertreter: Feist, Florian Arno
(86) Internationale Anmeldenummer: PCT/EP2017/078828
(87) Internationale Veröffentlichungsnummer: WO 2018/099708

(56) Entgegenhaltungen:
- EP-A1- 2 418 727
- WO-A1-2014/191812
- DE-C1- 19 710 824
- GB-A- 2 287 743
- GB-A- 2 328 238
- US-A1- 2005 076 572
- US-A1- 2008 092 464
- US-A1- 2012 055 094

## Beschreibung

Die Erfindung betrifft eine laminierte Seitenscheibe für ein Fahrzeug mit einem Befestigungsloch, ein Verfahren zu deren Herstellung sowie deren Verwendung.

Kraftfahrzeuge verfügen typischerweise über zu öffnende Seitenfenster. Solche Seitenfenster sind mit einer Seitenscheibe versehen, welche sich durch im Wesentlichen vertikale Verschiebung bewegen lässt, wodurch das Seitenfenster geöffnet und geschlossen werden kann. Um das Fenster bewegen zu können, ist es mit einem Mechanismus im Inneren der Fahrzeugkarosserie verbunden.

Seitenscheiben von Kraftfahrzeugen sind meist als Einscheibensicherheitsglas (ESG) ausgebildet, bestehen also aus einer einzelnen, thermisch vorgespannten Glasscheibe. Diese Seitenscheiben sind typischerweise mit einem oder mehreren Löchern in der Nähe der Unterkante ausgestattet, die zur Anbindung an den Verschiebemechanismus dienen. Solche Löcher sind in ESG-Scheibe sind recht einfach zu erzeugen und ermöglichen eine einfache und sehr stabile Montage.

Es sind aber zunehmend auch Seitenscheiben gebräuchlich, die als Verbundsicherheitsglas (VSG) ausgebildet sind, insbesondere für Fahrzeuge höherer Preisklassen. Diese Seitenscheiben bestehen aus zwei Glasscheiben, die mittels Lamination über eine thermoplastische Zwischenschicht (typischerweise eine PVB-Folie) miteinander verbunden sind. Sie weisen ein geringeres Gewicht auf als ESG-Seitenscheiben und verbessern den akustischen Komfort im Fahrzeug sowie die Einbruchssicherheit. Da VSG-Scheibe mit Löchern schwieriger herzustellen sind und weniger stabil sind als bei ESG-Scheiben, werden VSG-Seitenscheiben herkömmlich auf andere Weise mit dem Verschiebemechanismus verbunden: ein Halter wird an die Unterkante angeklebt.

Da die Anbringung der Seitenscheibe an den Verschiebemechanismus mittels eines Loches bevorzugt ist, besteht Bedarf an laminierten Seitenscheiben mit Befestigungslöchern. Es ist schwierig, die Löcher in den beiden Einzelscheiben exakt übereinander zu positionieren. Herstellungstoleranzen können zu einem gewissen Versatz zwischen den Löchern führen. Insbesondere aber bewirkt die Scheibenkrümmung bei herkömmlichen Seitenscheiben einen systematischen Versatz. Typischerweise werden zwei Scheiben gleicher Größe und Form und mit Löchern an der gleichen Position miteinander laminiert. Die Ausrichtung der beiden Scheiben zueinander erfolgt typischerweise an der Oberkante, weil diese im geöffneten Zustand sichtbar ist und deshalb aus ästhetischen Gründen bündig sein soll. Da Kraftfahrzeugscheiben gekrümmt sind, führt diese Ausrichtung an der Oberkante dazu, dass die Unterkante und das Loch der Innenscheibe gegenüber der Unterkante und dem Loch der Außenscheibe nach unten verschoben werden.

Dieser systematische Versatz führt zu Schwierigkeiten bei der Montage der Halterung. Diese ist typischerweise ein Klemmelement, das zwischen Unterkante und der Durchführung eingeklemmt wird. Die Halterung ist also durch Druck auf die Unterkante und den ihr gegenüberliegendem Bereich der Kante der Durchführung klemmend fixiert. Durch den vorstehend beschriebenen systematischen Versatz wird die durch das Klemmelement zu überbrückende Distanz ("Klemmdistanz") durch die Unterkante der Innenscheibe und die Lochkante der Außenscheibe festgelegt. Da sich die relative Anordnung von Außenscheibe und Innenscheibe infolge von Herstellungstoleranzen ändern kann, ist die Klemmdistanz in einer Herstellungsserie nicht genau konstant und eine sichere und reproduzierbare Anklemmung der Haltung wird erschwert.

Da in der Regel infolge einer nicht perfekten Ausrichtung die Last der Klemmung nicht gleichmäßig auf beide Scheiben verteilt wird, sondern am oberen und unteren Klemmpunkt jeweils auf einer einzigen Scheibe ruht, werden die Scheiben zudem mechanisch stark belastet. Es besteht daher auch Bedarf an laminierten Seitenscheiben mit Befestigungslöchern und verbesserter Stabilität.

Die US 2008/0092464 A1 offenbart eine Verbundglasscheibe mit einer Befestigungsausnehmung, in die von beiden Seiten drehbare Bauteile mit jeweils einem außerzentrisch angeordneten Loch eingeführt sind. Durch Drehen der Bauteile gegeneinander können die Löcher in Deckung gebracht werden, so dass sich unabhängig von einem etwaigen Versatz der Glasscheiben ein Befestigungsloch reproduzierbarer Form und Größe ergibt. Das Befestigungssystem gemäß US 2008/0092464 A1 ist aufgrund seiner vielteiligen Ausgestaltung aber kompliziert und fehleranfällig.

Die DE 197 10 824 C1 offenbart eine Verbundglasscheibe mit einem Befestigungsloch, die eine Fahrzeugseitenscheibe sein kann. Das Loch in der Außenscheibe ist größer ausgebildet als das Loch in der Innenscheibe, um eine Art umlaufende Stufe innerhalb des Befestigungslochs zu bilden. Dadurch soll die Verbindung zu einem Halteelement über eine Klebemasse verbessert werden.

EP 2 418 727 A1 offenbart eine Verbundglasscheibe mit einem Befestigungsloch für eine Antenne. Die Verbundglasscheibe besteht aus einer Außenscheibe, einer Innenscheibe und einer dazwischen angeordneten Zwischenschicht. Das Befestigungsloch ist eine Durchführung, die sich aus einander überlagerten Löchern in der Außenscheibe, der Zwischenschicht und der Innenscheibe ergibt. Das Loch in der Innenscheibe ist dabei größer als das Loch in der Außenscheibe.

Der vorliegenden Erfindung liegt die Aufgabe zugrunde, eine verbesserte Fahrzeug-Seitenscheibe mit einem Befestigungsloch bereitzustellen, die eine hohe mechanische Stabilität aufweist, eine reproduzierbare Verbindung mit dem Verschiebemechanismus der Fahrzeug-Karosserie ermöglicht und einfach herstellbar ist.

Die Aufgabe der vorliegenden Erfindung wird erfindungsgemäß durch eine Seitenscheibe gemäß Anspruch 1 gelöst. Bevorzugte Ausführungen gehen aus den Unteransprüchen hervor.

Die Seitenscheibe ist als Fahrzeug-Seitenscheibe dafür vorgesehen, einen Fahrzeuginnenraum von einer äußeren Umgebung abzutrennen. Die beiden Scheiben können daher auch als Außenscheibe und Innenscheibe bezeichnet werden. Mit Innenscheibe wird dabei diejenige Scheibe bezeichnet, welche in Einbaulage dem Innenraum zugewandt ist. Mit Außenscheibe wird diejenige Scheibe bezeichnet, welche in Einbaulage der äußeren Umgebung zugewandt ist.

Die Seitenscheibe weist außerdem eine Oberkante, eine Unterkante, eine Vorderkante und eine Hinterkante auf. Mit Oberkante wird die Seitenkante der Seitenscheibe bezeichnet, welche in Einbaulage nach oben weist. Mit Unterkante wird die Seitenkante bezeichnet, welche in Einbaulage nach unten zum Erdboden weist. Mit Vorderkante wird die Seitenkante bezeichnet, welche in Fahrtrichtung nach vorne gerichtet ist. Mit Hinterkante wird die Seitenkante bezeichnet, welche in Fahrtrichtung nach hinten gerichtet ist.

Die erfindungsgemäße Seitenscheibe umfasst mindestens eine erste Scheibe und eine zweite Scheibe, die über eine thermoplastische Zwischenschicht miteinander verbunden sind. Sie ist also als laminierte Scheibe oder Verbundglasscheibe ausgebildet. Die erfindungsgemäße Seitenscheibe weist mindestens eine Durchführung auf. Die Durchführung dient als Befestigungsloch, insbesondere um die Seitenscheibe mit dem Verschiebemechanismus einer Fahrzeugkarosserie zu verbinden, typischerweise den in der Seitentür angeordneten Hebe-und Senkmechanismus.

Die Durchführung wird dadurch gebildet, dass die erste Scheibe, die zweite Scheibe und die thermoplastische Zwischenschicht jeweils ein Loch aufweisen, wobei die besagten Löcher einander vollständig oder zumindest teilweise überlappen. Sie sind einander also derart überlagert, dass sich eine Durchführung durch die gesamte Seitenscheibe erstreckt, die durch die überlappenden Bereiche der Löcher ausgebildet wird.

Die Durchführung ist zur Befestigung eines Klemmelements vorgesehen und geeignet. Das Klemmelement wird zwischen Durchführung und Unterkante angeklemmt. Damit ist gemeint, dass das Klemmelement einerseits in das Befestigungsloch eingeführt ist und andererseits die Unterkante der Seitenscheibe zumindest teilweise bedeckt, so dass durch das Klemmelement ein mechanischer Druck einerseits auf die Unterkante und andererseits auf den ihr gegenüberliegenden Bereich der Seitenkante der Durchführung ausgeübt wird. Durch diese einander entgegengesetzten Kräfte wird das Klemmelement an der Seitenscheibe fixiert. Die Klemmverbindung kann zwar beispielsweise durch einen Klebstoff unterstützt werden, die Durchführung ist aber insbesondere nicht vollständig mit einer Klebemasse gefüllt.

Herkömmliche laminierte Seitenscheiben werden aus zwei Glasscheiben gefertigt, die im Wesentlichen die gleiche Form und die gleichen Abmessungen haben und die mit Löchern gleicher Größe an der gleichen Position versehen sind. Seitenscheiben sind zudem (bezogen auf den Fahrzeuginnenraum konvex) gebogen und werden bei der Lamination an der Oberkante zueinander ausgerichtet, also so aufeinander angeordnet, dass die Oberkanten im Wesentlichen bündig sind. Dies soll das Erscheinungsbild der Seitenscheibe verbessern, da die Oberkante im geöffneten Zustand des Fensters sichtbar ist. Die Scheibenkrümmung führt dabei dazu, dass die Unterkante sowie das Loch der Innenscheibe gegenüber der Unterkante und dem Loch der Außenscheibe nach unten verschoben werden. Die Löcher sind zueinander versetzt und die verbleibende Durchführung durch das Verbundglas ist kleiner als die Löcher der einzelnen Scheiben. Die Seitenscheiben werden mit einer Halterung versehen, die zur Anbindung an den Hebemechanismus der Fahrzeugkarosserie, typischerweise innerhalb der Fahrzeugtür, dienen. Hierfür werden typischerweise Klemmelemente als Halterungen eingesetzt, die den Bereich zwischen Durchführung und Unterkante überbrücken, also zwischen Durchführung und Unterkante angeklemmt sind. Das Klemmelemente übt einander entgegengesetzte Kräfte einerseits auf die Unterkante und andererseits auf den der Unterkante gegenüberliegenden Bereich der Seitenkante der Durchführung aus. Da die Scheiben im unteren Bereich gegeneinander versetzt sind, wird die Kraft lediglich von der jeweils hervorstehenden Scheibe aufgenommen. Im vorstehend beschriebenen herkömmlichen Fall sind dies die Unterkante der Innenscheibe und der ihr gegenüberliegende Bereich der Seitenkante des Lochs der Außenscheibe. Diese bestimmen die Klemmdistanz, womit im Sinne der Erfindung der Abstand zwischen den kraftaufnehmenden Flächen, also der durch das Klemmelement zu überbrückende Abstand bezeichnet wird. Da beide Einzelscheiben herkömmlicher laminierter Seitenscheiben einen Einfluss auf die Klemmdistanz haben, diese aber aufgrund von Herstellungstoleranzen im Rahmen einer Produktionsserie nicht absolut konstant sind, tritt eine Streuung von Klemmdistanzen auf und das Klemmelement kann bei einem Teil der Produktionsserie nicht sicher befestigt werden (wenn die Klemmdistanz zu klein ist) oder gar nicht erst aufgesteckt werden (wenn die Klemmdistanz zu groß ist).

Erfindungsgemäß wird dieses Problem dadurch gelöst, dass die Löcher der beiden Einzelscheiben mit unterschiedlicher Größe ausgebildet werden. Die Seitenscheibe ist bevorzugt gebogen, insbesondere so, dass die von der Zwischenschicht abgewandte Oberfläche der ersten Scheibe konvex und die von der Zwischenschicht abgewandte Oberfläche der zweiten Scheibe konkav gekrümmt ist. Die Unterkante der zweiten Scheibe steht dann über die Unterkante der ersten Scheibe über. Das Loch der ersten Scheibe ist erfindungsgemäß größer als das Loch der zweiten Scheibe. Dadurch wird erreicht, dass trotz der Relativverschiebung der der Unterkante gegenüberliegende Bereich der Seitenkante des Lochs der zweiten Scheibe über denjenigen der ersten Scheibe übersteht. Die Klemmdistanz wird dann durch die Unterkante der zweiten Scheibe und den ihr gegenüberliegenden Bereich der Seitenkante des Lochs der zweiten Scheibe bestimmt. Die Klemmdistanz ist dann nur noch von der zweiten Scheibe abhängig und unterliegt nicht mehr den Herstellungstoleranzen hinsichtlich der relativen Anordnung der Scheiben. Die Klemmdistanz ist daher im Rahmen einer Produktionsserie im Wesentlichen konstant (nur noch abhängig von den Toleranzen bei der Positionierung des Lochs der zweiten Scheibe) und die Zuverlässigkeit des Klemmelements wird verbessert. Das ist der große Vorteil der Erfindung.

Da Fahrzeugscheiben in der Regel so gebogen sind, dass die von der Zwischenschicht abgewandte Oberfläche der Außenscheibe konvex und die von der Zwischenschicht abgewandte Oberfläche der Innenscheibe konkav ist, ist in einer bevorzugten Ausgestaltung die erste Scheibe die Außenscheibe und die zweite Scheibe die Innenscheibe. Die Klemmdistanz ist dann nur von der Innenscheibe abhängig. Als außenseitige Oberfläche einer Scheibe wird diejenige Oberfläche bezeichnet, welche in Einbaulage der äußeren Umgebung zugewandt ist. Als innenraumseitige Oberfläche wird diejenige Oberfläche bezeichnet, welche in Einbaulage dem Innenraum zugewandt ist. Im Verbundglas sind also die innenraumseitige Oberfläche der Außenscheibe und die außenseitige Oberfläche der Innenscheibe über die Zwischenschicht miteinander verbunden. Es ist gebräuchlich, die außenseitige Oberfläche der Außenscheibe als *Seite I,* die innenraumseitige Oberfläche der Außenscheibe als *Seite II,* die außenseitige Oberfläche der Innenscheibe als *Seite III* und die innenraumseitige Oberfläche der Innenscheibe als *Seite IV* zu bezeichnet.

Die erfindungsgemäße Seitenscheibe ist bevorzugt eine zu öffnende Seitenscheibe eines Kraftfahrzeugs, insbesondere eines Personenkraftwagens. Darunter wird eine Scheibe für ein Seitenfenster verstanden, welches sich durch im Wesentlichen vertikale Verschiebung der Seitenscheibe in die Karosserie hinein öffnen und wieder schließen lässt. Typischerweise weisen solche Seitenscheiben mehrere, insbesondere zwei Durchführungen auf. Die Durchführung oder Durchführungen sind im Bereich der Unterkante angeordnet, wo sie im geöffneten und auch im geschlossenen Zustand des Fensters in der Fahrzeugkarosserie verborgen sind. Die Durchführung ist zur Verbindung mit einem in der Fahrzeugkarosserie angeordneten Hebemechanismus vorgesehen, um die Scheibe zu befestigen, insbesondere durch Einführen eines Befestigungsabschnitts des Hebemechanismus, beispielsweise eines Befestigungsstifts, in die Durchführung. Dadurch kann auf aufwendige, an der Unterkante der Seitenscheibe angebrachte Halter verzichtet werden, die bislang für laminierte Seitenscheiben verbreitet sind.

Jede Durchführung weist üblicherweise einen Abstand zur Unterkante von höchstens 50 mm auf, insbesondere von 10 mm bis 30 mm. Die Größe der Durchführung beträgt üblicherweise mindestens 20 mm², insbesondere von 20 mm² bis 2000 mm², bevorzugt von 80 mm² bis 700 mm². Die Durchführung ist idealerweise etwa kreisrund mit einem Durchmesser von 5 mm bis 50 mm, bevorzugt von 10 mm bis 30 mm.

Unter dem Abstand einer Durchführung oder eines Lochs von einer Seitenkante wird im Sinne der Erfindung stets der Abstand (die Länge der kürzesten Verbindungsstrecke) der betreffenden Seitenkante vom geometrischen Zentrum der Durchführung oder des Lochs verstanden. Im Falle eines kreisrunden Lochs ist beispielsweise der Abstand zwischen Kreismittelpunkt und Seitenkante heranzuziehen.

Die Löcher in der ersten und der zweiten Scheibe sind üblicherweise im Wesentlichen kreisrund, worauf die meisten herkömmlichen Befestigungssysteme ausgelegt sind. Die Löcher können aber je nach den Erfordernissen im Einzelfall auch jede beliebige andere Form aufweisen, beispielsweise eine elliptische Form oder auch eine unregelmäßige Form. Die Größe eines Lochs beträgt üblicherweise mindestens 20 mm², insbesondere von 80 mm² bis 700 mm². Im Falle kreisrunder Löcher beträgt der Durchmesser bevorzugt mindestens, 5 mm, insbesondere von 10 mm bis 30 mm.

Die nötige Größendifferenz der Löcher der ersten und der zweiten Scheibe hängt auch von der Scheibenkrümmung und Scheibengröße ab. Bei der gekrümmten Verbundscheibe sollte derjenige Punkt der Seitenkante des Lochs der zweiten Scheibe mit dem geringsten Abstand zur Unterkante über denjenigen Punkt der Seitenkante des Lochs der ersten Scheibe mit dem geringsten Abstand zur Unterkante überstehen - also über ihn hinaus in die Durchführung hineinragen. Vereinfacht ausgedrückt sitzt der untere Bereich des Lochs der ersten Scheibe tiefer als derjenige des Lochs der zweiten Scheibe. Die Größendifferenz sollte ausreichend gewählt werden, dass dies bei gegebener Scheibenkrümmung und Scheibengröße sichergestellt ist.

In einer bevorzugten Ausgestaltung ist die Fläche des Lochs der ersten Scheibe um mindestens 10% größer als die Fläche des Lochs der zweiten Scheibe, besonders bevorzugt um mindestens 20%. Im Falle von kreisrunden Löchern ist der Durchmesser des Lochs der ersten Scheibe um mindestens 5% größer als der Durchmesser des Lochs der zweiten Scheibe, besonders bevorzugt um mindestens 10%. Bei typischen Lochgrößen sollte der Durchmesser des Lochs der ersten Scheibe mindestens 1 mm größer sein als der Durchmesser des Lochs der zweiten Scheibe.

In einer vorteilhaften Ausgestaltung sind die erste Scheibe und die zweite Scheibe an der Oberkante zueinander ausgerichtet, also im Wesentlichen bündig angeordnet. Dies ist bei laminierten Seitenscheiben üblich und ist vorteilhaft im Hinblick auf ein ästhetisches Erscheinungsbild der Oberkante, welche im geöffneten Zustand sichtbar ist. Das Loch der ersten Scheibe weist dabei bevorzugt einen geringeren Abstand zur Unterkante auf als das Loch der zweiten Scheibe. Das Loch der ersten Scheibe ist also im Vergleich zum Loch der zweiten Scheibe etwas nach unten versetzt. Dadurch wird der systematische Versatz, der durch das Biegen der Scheiben erzeugt wird, zumindest teilweise kompensiert und die Größendifferenz zwischen den Löchern der beiden Scheiben kann kleiner gewählt werden.

In einer alternativen vorteilhaften Ausgestaltung sind die erste Scheibe und die zweite Scheibe an der Unterkante zueinander ausgerichtet, also im Wesentlichen bündig angeordnet. Da die Löcher in der Nähe der Unterkante angeordnet sind, wird dadurch der systematische Versatz durch die Scheibenbiegung vermindert, wodurch die Größendifferenz zwischen den Löchern der beiden Scheiben kleiner gewählt werden kann. Damit geht zwar ein Versatz an der sichtbaren Oberkante einher, der aber im Einzelfall akzeptabel sein und in Kauf genommen werden kann. Die Löcher der ersten und der zweiten Scheibe können dann im Wesentlichen den gleichen Abstand zur Unterkante aufweisen, wie es auch bei herkömmlichen laminierten Seitenscheiben üblich ist.

In einer vorteilhaften Weiterbildung der Seitenscheibe ist das Loch der Zwischenschicht kleiner ist als die Löcher in der ersten Scheibe und in der zweiten Scheibe, weist insbesondere einen geringeren Durchmesser auf. Bei der Anordnung des Schichtstapels vor der Lamination ragt also die thermoplastische Folie, welche später die Zwischenschicht ausbildet, etwas in den Bereich der Löcher der Scheiben hinein. Bei der Lamination fließt das thermoplastische Material über die Seitenkante der Durchführung, wodurch diese geschützt wird. So kann die mechanische Stabilität der Seitenscheibe verbessert werden.

Je nach verwendetem Halterungssystem kann thermoplastisches Material in der Durchführung aber auch störend für die Anbringung des Halters sein. Daher ist in einer alternativen bevorzugten Weiterbildung das Loch der Zwischenschicht größer ist als die Löcher in der ersten Scheibe und in der zweiten Scheibe, weist insbesondere einen größeren Durchmesser auf. Die Seitenkante des Lochs der Zwischenschicht ist also gegenüber denjenigen der Löcher der Scheiben zurückgesetzt und die Durchführung bleibt frei von thermoplastischen Material, wodurch die Anbringung des Halters einfacher und zuverlässiger gestaltet wird.

In einer vorteilhaften Ausgestaltung weist die erste Scheibe und/oder die zweite Scheibe an ihrem jeweiligen Loch eine Rand-Druckspannung von mindestens 20 MPa, bevorzugt mindestens 30 MPa auf. Die Rand-Druckspannung wird an der Seitenkante im jeweiligen Loch gemessen mit Methoden, die dem Fachmann an sich bekannt sind. Ein geeignetes Analysegerät ist beispielsweise der *Edge stress Master* der Firma *Sharples Stress Engineers Ltd.* Die Rand-Druckspannung kann beispielsweise über die Abkühlrate am Loch nach dem Biegen der Scheibe beeinflusst werden. Im angegebenen Bereich ist die Seitenscheibe im Bereich der Durchführung besonders mechanisch belastbar, wobei die angegebenen Werte bevorzugt auf beide Einzelscheiben zutreffen.

In einer bevorzugten Ausgestaltung weist die erste Scheibe und/oder die zweite Scheibe eine Oberflächenspannung von mindestens 20 MPa, besonders bevorzugt mindestens 30 MPa, ganz besonders bevorzugt mindestens 40 MPa auf. Die Oberflächenspannung ist ebenfalls eine Druckspannung, die sich durch die Abkühlrate nach dem Scheibenbiegen beeinflussen lässt. Geeignete Messgerät sind beispielsweise *GASF®* Polarimeter der Firma *Strainoptics, Inc.* Durch die bevorzugten Spannungswerte wird eine hohe mechanische Stabilität sichergestellt, wobei die angegebenen Werte bevorzugt auf beide Einzelscheiben zutreffen.

Beim Bohren von Löchern in Glasscheiben treten an der Bohrkante zwangsläufig sogenannte Ausmuschelungen auf. Diese Beschädigungen werden häufig auch Abplatzer oder *Chips* genannt. Die Erfinder haben erkannt, dass die Größe der Ausmuschelungen einen wesentlichen Einfluss auf die mechanische Belastbarkeit der Durchführung hat. Die Größe der Ausmuschelungen *(Chip Size)* sollte höchstens 750 µm, bevorzugt höchstens 500 µm und besonders bevorzugt höchstens 300 µm. Als Größe wird die Länge der Ausmuschelung entlang ihrer ausgedehntesten Dimension bezeichnet. Sie lässt sich durch geeigente Maßnahmen beim Bohren der Löcher beeinflussen, beispielsweise durch den verwendeten Bohrkopf, die Rotationsgeschwindigkeit oder die Penetrationsgeschwindigkeit beim Bohren.

Die erste Scheibe und die zweite Scheibe enthalten bevorzugt Glas, insbesondere Kalk-Natron-Glas. Die Dicke der Scheiben kann breit variieren und so hervorragend den Erfordernissen im Einzelfall angepasst werden. Vorzugsweise betragen die Dicken der ersten und der zweiten Scheibe von 0,5 mm bis 10 mm und bevorzugt von 1 mm bis 5 mm, ganz besonders bevorzugt von 1,1 mm bis 2,6 mm.

Die thermoplastische Zwischenschicht wird durch mindestens eine thermoplastische Folie gebildet. Die thermoplastische Folie enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Dicke der thermoplastischen Verbindungsfolie beträgt bevorzugt von 0,2 mm bis 2 mm, besonders bevorzugt von 0,3 mm bis 1 mm, beispielsweise 0,38 mm oder 0,76 mm. Die Zwischenschicht kann auch aus einer sogenannten akustischen Folie ausgebildet sein, welche eine geräuschdämpfende Wirkung hat. Solche Folien bestehen typischerweise aus mindestens drei Lagen, wobei die mittlere Lage eine höhere Plastizität oder Elastizität aufweist als die sie umgebenden äußeren Lagen, beispielsweise infolge eines unterschiedlichen Anteils an Weichmachern.

Die erste Scheibe, die zweite Scheibe oder die Zwischenschicht können klar und farblos, aber auch getönt, getrübt oder gefärbt sein.

Die Erfindung umfasst eine erfindungsgemäße laminierte Seitenscheibe mit einer in der Durchführung befestigten Halterung. Die Halterung ist ein Klemmelement, das zwischen Durchführung und Unterkante angeklemmt ist. Das Klemmelement übt bevorzugt seine Klemmkraft direkt auf die Seitenkante der Durchführung aus, ohne das weitere massiven, starren Elemente in der Durchführung zwischen Seitenkante und Klemmelement angeordnet sind, wie Kompensationselemente oder Kantenversiegelungen. Das Klemmelement ist also bevorzugt direkt an die Scheiben angeklemmt. Es können aber flexible Elemente, beispielsweise ein Klebstoff oder thermoplastisches Material der

Zwischenschicht, zwischen Klemmelement und Seitenkante der Durchführung angeordnet sein.

Die Erfindung umfasst auch eine Anordnung aus einer Fahrzeugkarosserie mit einem darin angeordneten Hebemechanismus für ein zu öffnendes Seitenfenster und einer erfindungsgemäßen Seitenscheibe, die über eine Halterung in der Durchführung mit dem Hebemechanismus verbunden ist.

Die Erfindung umfasst außerdem ein Verfahren zur Herstellung einer Seitenscheibe mit einem durchgehenden Befestigungsloch, wobei:
(a) eine erste Scheibe, eine zweite Scheibe und eine thermoplastische Zwischenschicht mit jeweils einem Loch versehen werden, wobei das Loch der ersten Scheibe größer ist als das Loch der zweiten Scheibe,
(b) die erste Scheibe, die thermoplastische Zwischenschicht und die zweite Scheibe in dieser Reihenfolge flächig zu einem Stapel übereinander angeordnet werden, wobei besagte Löcher einander derart überlagert werden, dass sich eine Durchführung durch den gesamten Stapel erstreckt,
(c) die erste Scheibe mit der zweiten Scheibe über die Zwischenschicht durch Lamination verbunden wird. Anschließend wird ein Klemmelement zwischen der Durchführung und der Unterkante angeklemmt.

Die Löcher in den Einzelscheiben werden durch Bohren oder andere, dem Fachmann an sich bekannte Verfahren erzeugt. Das Loch in der Zwischenschicht wird bevorzugt durch Schneiden oder Stanzen erzeugt.

Die Einzelscheiben werden bevorzugt vor der Lamination gebogen, wobei alle fachüblichen Biegeverfahren geeignet sind. Das Biegen findet bevorzugt erst nach dem Erzeugen der Löcher in den Einzelscheiben statt, weil plane Scheiben einfacher mit Löchern zu versehen sind.

Die Herstellung des Verbundglases durch Lamination erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von erster und zweiter Scheibe erfolgt dabei üblicherweise unter Einwirkung von Hitze, Vakuum und/oder Druck.

Die Erfindung umfasst außerdem die Verwendung einer erfindungsgemäßen Seitenscheibe als zu öffnende Seitenscheibe eines Kraftfahrzeugs, bevorzugt eines Personenkraftwagens, wobei die Durchführung zur Befestigung an einem Hebemechanismus in der Fahrzeugkarosserie dient.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Insbesondere sind die Scheibendicken und die Größe der Löcher deutlich vergrößert dargestellt zur besseren Veranschaulichung des erfindungsgemäßen Prinzips.

Es zeigen:
- Fig. 1: eine Draufsicht auf eine Ausgestaltung der Seitenscheibe ohne Klemmelement,
- Fig. 2: einen Schnitt entlang A-A' durch eine herkömmliche Seitenscheibe,
- Fig. 3: einen Schnitt entlang A-A' durch eine Ausgestaltung der Seitenscheibe aus Fig. 1,
- Fig. 4: die Seitenscheibe aus Fig. 3 mit eingesetztem Klemmelement,
- Fig. 5: einen Schnitt entlang A-A' durch eine weitere Ausgestaltung der Seitenscheibe ohne Klemmelement,
- Fig. 6: einen Schnitt entlang A-A' durch eine weitere Ausgestaltung der Seitenscheibe ohne Klemmelement,
- Fig. 7: ein Flussdiagramm einer Ausführungsform des Herstellungsverfahrens ohne den Schritt des Anklemmens des Klemmelements.

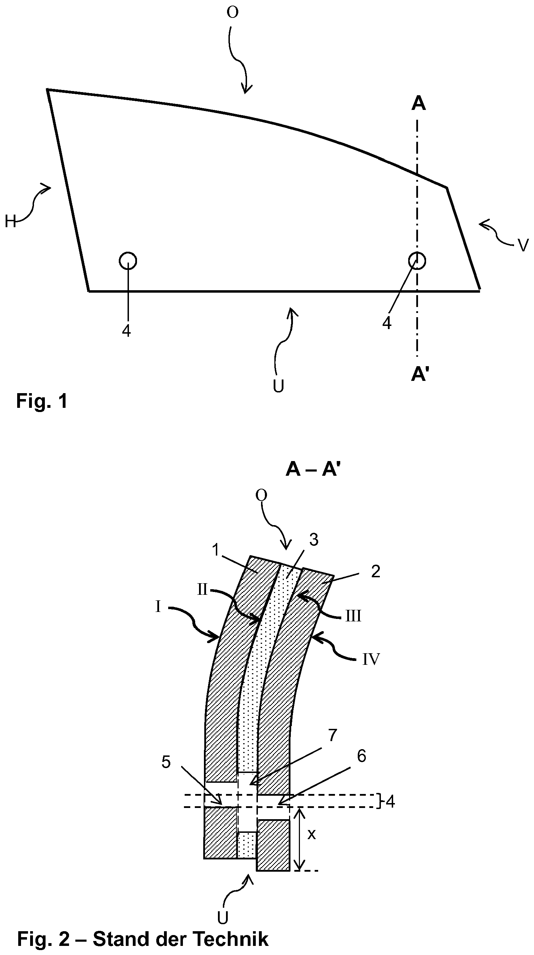

Fig. 1 zeigt eine Draufsicht auf eine laminierte Seitenscheibe, die als zu öffnende Seitenscheibe für das vordere Seitenfenster eines Personenkraftwagens vorgesehen ist. Die Seitenscheibe weist in der Nähe der Unterkante U zwei Durchführungen 4 auf, die als Befestigungslöcher zur Verbindung mit einem Hebemechanismus in der Fahrzeugkarosserie vorgesehen sind.

Fig. 2 zeigt einen Querschnitt durch eine herkömmliche gattungsgemäße laminierte Seitenscheibe. Sie ist aufgebaut aus einer ersten Scheibe 1 und einer zweiten Scheibe 2, verbunden durch eine thermoplastische Zwischenschicht 3. Die beiden Scheiben 1, 2 bestehen beispielsweise aus Kalk-Natron-Glas und weisen eine Dicke von jeweils 2,1 mm auf. Die Zwischenschicht 3 ist beispielsweise durch eine PVB-Folie mit einer Dicke von 0,76 mm ausgebildet. Jede Scheibe 1, 2 sowie die Zwischenschicht 3 weisen ein Loch 5, 6, 7 auf, durch deren Überlagerung die Durchführung 4 gebildet wird.

Die erste Scheibe 1 bildet die Außenscheibe, die zweite Scheibe 2 die Innenscheibe der Seitenscheibe. Die Seitenscheibe ist gekrümmt, so dass die außenseitige Oberfläche 1 der Außenscheibe 1 konvex und die innenraumseitige Oberfläche IV der Innenscheibe 2 konkav gekrümmt ist. Die einander zugewandten Oberflächen II, III der Scheiben 1, 2 sind über die Zwischenschicht 3 miteinander verbunden. Die beiden Scheiben 1, 2 sind so aufeinander angeordnet und ausgerichtet, dass die Oberkante O im Wesentlichen bündig ist. Die beiden Scheiben 1, 2 weisen die gleiche Form und Größe auf, mit Löchern 5, 6 gleicher Größe an der gleichen Position. Durch die Scheibenbiegung und die Ausrichtung an der Oberkante O wird die Überlagerung der beiden Löcher 5, 6 negativ beeinflusst: Das Loch 6 der Innenscheibe 2 sitzt etwas tiefer als das Loch 5 der Außenscheibe 1. Dadurch ist die verbleibende Durchführung 4, die sich gleichsam als Schnittmenge der beiden Löcher 5, 6 in der Projektion aufeinander ergibt, gegenüber den einzelnen Löchern 5, 6 verkleinert.

Die Durchführung 4 ist zur Befestigung einer Halterung vorgesehen, die als Klemmelement zwischen Durchführung 4 und Unterkante U angeklemmt wird. Der Abstand zwischen den beiderseits am meisten hervorstehenden Flächen ist die Klemmdistanz x - also der Abstand, der durch das Klemmelement überbrückt werden muss. Wie aus der Figur ersichtlich ist, wird die Klemmdistanz x festgelegt
- einerseits durch den unteren Bereich der Seitenkante des Lochs 5 der Außenscheibe 1 und
- andererseits durch die Unterkante U der Innenscheibe 2.
Aufgrund von Fertigungstoleranzen unterliegt die Positionierung der Scheiben 1, 2 aufeinander einer gewissen Streuung, und dadurch auch die Klemmdistanz x. Diese Streuung hinsichtlich der Klemmdistanz x erschwert die zuverlässige Anbringung der Klemmhalterungen in einer Produktionsserie.

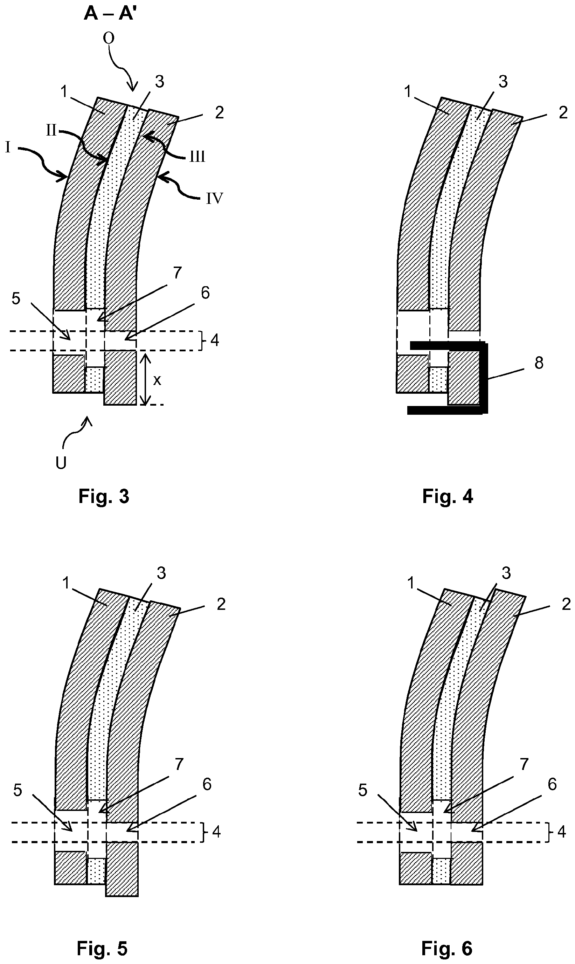

Fig. 3 zeigt einen Querschnitt durch eine erfindungsgemäße laminierte Seitenscheibe. Das Loch 5 der Außenscheibe 1 ist hierbei größer ausgebildet als das Loch 6 der Innenscheibe 2. Beispielsweise sind beide Löcher 5, 6 kreisrund, wobei das Loch 5 der Außenscheibe 1 einen Durchmesser von 16 mm aufweist und das Loch 6 der Innenscheibe 2 einen Durchmesser von 14 mm. Die beiden Löcher 5, 6 (genauer gesagt die Mittelpunkte der Löcher 5, 6) weisen auch hier den gleichen Abstand zu ihrer jeweiligen Unterkante U auf. Die beiden Scheiben 1, 2 sind an der Oberkante O im Wesentlichen bündig ausgerichtet.

Durch den größeren Durchmesser des Lochs 5 der Außenscheibe 1 ist der untere Bereich der Seitenkante des Lochs 5 tiefer angeordnet als der entsprechende Bereich der Seitenkante des Lochs 6 der Innenscheibe 2. Die Klemmdistanz x hängt damit nur noch von der Innenscheibe 2 ab, nämlich deren Loch 6 und deren Unterkante U. Die herstellungsbedingte Streuung hinsichtlich der Klemmdistanz x wird so deutlich verringert. Die Größe der Durchführung 4 entspricht in der Größe des Lochs 6 der Innenscheibe 2, welches in dem gezeigten Beispiel vollständig innerhalb des Lochs 5 der Außenscheibe 1 angeordnet ist (bezogen auf die Projektion aufeinander).

Fig. 4 zeigt die Seitenscheibe der Fig. 3 mit angebrachtem Klemmelement 8. Das Klemmelement 8 ist aus Kunststoff gefertigt und zwischen Unterkante U und Durchführung 4 angeklemmt. Es dient als Halterung, um die Seitenscheibe mit dem Hebemechanismus in der Seitentür eines Personenkraftwagen zu verbinden. Durch die erfindungsgemäße Gestaltung der Löcher 5, 6 der Scheiben 1, 2 werden die Bereiche der Unterkante U und der Durchführung 4, die den Klemmdruck des Klemmelements 8 aufnehmen, lediglich von der Innenscheibe 2 bereitgestellt.

Fig. 5 zeigt einen Querschnitt durch eine weitere Ausgestaltung der erfindungsgemäßen Seitenscheibe. Im Unterschied zur Ausgestaltung der Fig. 3 weist das Loch 6 einen geringeren Abstand zur Unterkante der Außenscheibe 1 auf als das Loch 5 zur Unterkante der Innenscheibe 2 (jeweils gemessen vom Loch-Mittelpunkt). Das Loch 6 wird dadurch noch weiter gegenüber dem Loch 5 nach unten versetzt. Dadurch kann das Loch 5 der Außenscheibe 1 kleiner ausgebildet werden, wobei dennoch sichergestellt ist, dass sein unterer Bereich nicht über denjenigen des Lochs 6 der Innenscheibe 2 übersteht. Die Überlagerung der Löcher 5, 6 wird weiter verbessert.

Fig. 6 zeigt einen Querschnitt durch eine weitere Ausgestaltung der erfindungsgemäßen Seitenscheibe. Wie in der Ausgestaltung der Fig. 3 weisen die Löcher 5, 6 der beiden Scheiben 1, 2 den gleichen Abstand zur jeweiligen Unterkante U auf. Die beiden Scheiben 1, 2 sind jedoch so aufeinander angeordnet und ausgerichtet, dass die Unterkante U im Wesentlichen bündig ist. Da die Durchführungen 4 in der Nähe der Unterkante U angeordnet sind, wird die Verschiebung der Löcher 5, 6 zueinander infolge der Scheibenkrümmung verringert und ihre Überlagerung verbessert. Dadurch kann das Loch 5 der Außenscheibe 1 kleiner ausgebildet werden. Der systematische Versatz, der an der Oberkante O entsteht, wird dabei zugunsten der besseren Überlagerung der Löcher 5, 6 in Kauf genommen.

In den dargestellten Ausgestaltungen ist das Loch 7 der Zwischenschicht 3 jeweils größer ausgebildet als die Löcher 5, 6 der Scheiben 1, 2. Die Durchführung 4 bleibt dadurch frei von thermoplastischem Material und die Anbringung des Klemmelements 8 wird nicht gestört. Je nach verwendetem Klemmelement 8 kann es jedoch auch gewünscht sein, die Seitenkante der Durchführung 4 mit thermoplastischem Material zu schützen. Daher kann in alternativen Ausgestaltungen das Loch 7 kleiner ausgebildet sein als die Löcher 5, 6 der Scheiben 1, 2, so dass sich thermoplastisches Material der Zwischenschicht 3 in der Durchführung 4 ausbreitet.

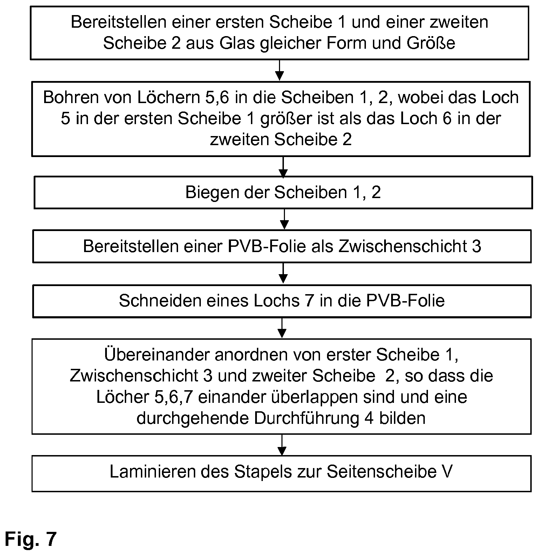

Fig. 7 zeigt ein Flussdiagramm eines Ausführungsbeispiels einesVerfahrens zur Herstellung einer laminierten Seitenscheibe. Erfindungsgemäß wird im Anschluss ein Klemmelement 8 zwischen der Durchführung 4 und der Unterkante U angeklemmt.

### Bezugszeichenliste:

- (1): erste Scheibe / Außenscheibe
- (2): zweite Scheibe / Innenscheibe
- (3): thermoplastische Zwischenschicht
- (4): Durchführung in der Seitenscheibe
- (5): Loch in der Außenscheibe 1
- (6): Loch in der Innenscheibe 2
- (7): Loch in der Zwischenschicht 3
- (8): Klemmelement

- (x): Klemmdistanz der Seitenscheibe

- (O): Oberkante
- (U): Unterkante
- (V): Vorderkante
- (H): Hinterkante

- I: außenseitige Fläche der Außenscheibe 1
- II: innenraumseitige Fläche der Außenscheibe 1
- III: außenseitige Fläche der Innenscheibe 2
- IV: innenraumseitige Fläche der Innenscheibe 2

- A-A': Schnittlinie

## Patentansprüche

1. Seitenscheibe für ein Fahrzeug, mit einer Oberkante (O), einer Unterkante (U), einer Vorderkante (V) und einer Hinterkante (H), mindestens umfassend eine erste Scheibe (1) und eine zweite Scheibe (2), die über eine thermoplastische Zwischenschicht (3) miteinander verbunden sind,
wobei die erste Scheibe (1), die zweite Scheibe (2) und die thermoplastische Zwischenschicht (3) jeweils ein Loch (5, 6, 7) aufweisen
und wobei die Löcher (5, 6, 7) der ersten Scheibe (1), der zweiten Scheibe (2) und der thermoplastischen Zwischenschicht (3) einander derart überlagert sind, dass sich eine Durchführung (4) zur Befestigung eines Klemmelements (8) durch die gesamte Seitenscheibe erstreckt,
und wobei das Loch (5) der ersten Scheibe (1) größer ist als das Loch (6) der zweiten Scheibe (2),
**dadurch gekennzeichnet, dass** ein Klemmelement (8) zwischen der Durchführung (4) und der Unterkante (U) angeklemmt ist.

2. Seitenscheibe nach Anspruch 1, die so gebogen ist, dass die von der Zwischenschicht (3) abgewandte Oberfläche (I) der ersten Scheibe (1) konvex und die von der Zwischenschicht (3) abgewandte Oberfläche (IV) der zweiten Scheibe (2) konkav gekrümmt ist.

3. Seitenscheibe nach Anspruch 1 oder 2, wobei der Punkt der Seitenkante des Lochs (6) der zweiten Scheibe (2) mit dem geringsten Abstand zur Unterkante (U) über denjenigen der ersten Scheibe (1) übersteht.

4. Seitenscheibe nach einem der Ansprüche 1 bis 3, wobei die Fläche des Lochs (5) der ersten Scheibe (1) um mindestens 10% größer als die Fläche des Lochs (6) der zweiten Scheibe (2).

5. Seitenscheibe nach einem der Ansprüche 1 bis 4, wobei die erste Scheibe (1) die Außenscheibe und die zweite Scheibe (2) die Innenscheibe der Seitenscheibe ist.

6. Seitenscheibe nach Anspruch 5, wobei die erste Scheibe (1) und die zweite Scheibe (2) an der Oberkante (O) bündig angeordnet sind und das Loch (5) der ersten Scheibe (1) einen geringeren Abstand zur Unterkante (U) aufweist als das Loch (6) der zweiten Scheibe (2).

7. Seitenscheibe nach einem der Ansprüche 1 bis 5, wobei die erste Scheibe (1) und die zweite Scheibe (2) an der Unterkante (U) bündig angeordnet sind und die Löcher (5, 6) der ersten Scheibe (1) und der zweiten Scheibe (2) einen im Wesentlichen gleichen Abstand zur Unterkante (U) aufweisen.

8. Seitenscheibe nach einem der Ansprüche 1 bis 7, wobei das Loch (7) der Zwischenschicht (3) größer ist als die Löcher (5, 6) in der ersten Scheibe (1) und der zweiten Scheibe (2).

9. Seitenscheibe nach einem der Ansprüche 1 bis 7, wobei das Loch (7) der Zwischenschicht (3) kleiner ist als die Löcher (5, 6) in der ersten Scheibe (1) und der zweiten Scheibe (2).

10. Seitenscheibe nach einem der Ansprüche 1 bis 9, wobei die erste Scheibe (1) und/oder die zweite Scheibe (2) am jeweiligen Loch (5, 6) eine Rand-Druckspannung von mindestens 20 MPa, bevorzugt mindestens 30 MPa aufweist.

11. Seitenscheibe nach einem der Ansprüche 1 bis 10, wobei die erste Scheibe (1) und/oder die zweite Scheibe (2) eine Oberflächenspannung von mindestens 20 MPa, bevorzugt mindestens 30 MPa, besonders bevorzugt mindestens 40 MPa aufweist.

12. Seitenscheibe nach einem der Ansprüche 1 bis 11, wobei die Ausmuschelungen an den Rändern der Löcher (5, 6) der ersten Scheibe (1) und der zweiten Scheibe (2) eine Größe von höchstens 750 µm, bevorzugt höchstens 500 µm aufweisen.

13. Verfahren zur Herstellung einer Seitenscheibe mit einem durchgehenden Befestigungsloch, wobei:
(a) eine erste Scheibe (1), eine zweite Scheibe (2) und eine thermoplastische Zwischenschicht (3) mit jeweils einem Loch (5, 6, 7) versehen werden, wobei das Loch (5) der ersten Scheibe (1) größer ist als das Loch (6) der zweiten Scheibe (2),
(b) die erste Scheibe (1), die thermoplastische Zwischenschicht (3) und die zweite Scheibe (2) flächig zu einem Stapel übereinander angeordnet werden, wobei besagte Löcher einander derart überlagert werden, dass sich eine Durchführung (4) durch den gesamten Stapel erstreckt,
(c) die erste Scheibe (1) mit der zweiten Scheibe (2) über die Zwischenschicht (3) durch Lamination verbunden wird,
(d) ein Klemmelement (8) zwischen der Durchführung (4) und einer Unterkante (U) der Seitenscheibe angeklemmt wird.

14. Verwendung einer Seitenscheibe nach einem der Ansprüche 1 bis 12 als zu öffnende Seitenscheibe eines Kraftfahrzeugs, bevorzugt eines Personenkraftwagens.

## Claims

1. Side window for a vehicle, with an upper edge (O), a lower edge (U), a front edge (V), and a rear edge (H), at least comprising a first pane (1) and a second pane (2) that are joined to one another via a thermoplastic intermediate layer (3),
wherein the first pane (1), the second pane (2), and the thermoplastic intermediate layer (3) each has a hole (5, 6, 7)
and wherein the holes (5, 6, 7) of the first pane (1), of the second pane (2), and of the thermoplastic intermediate layer (3) are superposed such that a leadthrough (4) for the fastening of a clamping element (8) extends through the entire side window,
and wherein the hole (5) of the first pane (1) is larger than the hole (6) of the second pane (2),
**characterised in that** a clamping element (8) is clamped on between the leadthrough (4) and the lower edge (U).

2. Side window according to claim 1, which is bent such that the surface (I) of the first pane (1) facing away from the intermediate layer (3) is convexly curved and the surface (IV) of the second pane (2) facing away from the intermediate layer (3) is concavely curved.

3. Side window according to claim 1 or 2, wherein the point of the side edge of the hole (6) of the second pane (2) with the smallest distance from the lower edge (U) protrudes beyond that of the first pane (1).

4. Side window according to one of claims 1 through 3, wherein the area of the hole (5) of the first pane (1) is greater by at least 10% than the area of the hole (6) of the second pane (2).

5. Side window according to one of claims 1 through 4, wherein the first pane (1) is the outer pane and the second pane (2) is the inner pane of the side window.

6. Side window according to claim 5, wherein the first pane (1) and the second pane (2) are arranged flush at the upper edge (O) and the hole (5) of the first pane (1) has a smaller distance from the lower edge (U) than the hole (6) of the second pane (2).

7. Side window according to one of claims 1 through 5, wherein the first pane (1) and the second pane (2) are arranged flush at the lower edge (U) and the holes (5, 6) of the first pane (1) and of the second pane (2) have a substantially equal distance from the lower edge (U).

8. Side window according to one of claims 1 through 7, wherein the hole (7) of the intermediate layer (3) is larger than the holes (5, 6) in the first pane (1) and the second pane (2).

9. Side window according to one of claims 1 through 7, wherein the hole (7) of the intermediate layer (3) is smaller than the holes (5, 6) in the first pane (1) and the second pane (2).

10. Side window according to one of claims 1 through 9, wherein the first pane (1) and/or the second pane (2) has, at the respective hole (5, 6), an edge compressive stress of at least 20 MPa, preferably at least 30 MPa.

11. Side window according to one of claims 1 through 10, wherein the first pane (1) and/or the second pane (2) has surface tension of at least 20 MPa, preferably at least 30 MPa, particularly preferably at least 40 MPa.

12. Side window according to one of claims 1 through 11, wherein the shells at the edges of the holes (5, 6) of the first pane (1) and of the second pane (2) have a size of at most 750 µm, preferably at most 500 µm.

13. Method for producing a side window having a continuous fastening hole, wherein:
(a) a first pane (1), a second pane (2), and a thermoplastic intermediate layer (3) are provided with, in each case, a hole (5, 6, 7), wherein the hole (5) of the first pane (1) is larger than the hole (6) of the second pane (2),
(b) the first pane (1), the thermoplastic intermediate layer (3), and the second pane (2) are arranged areally one atop another to form a stack, wherein said holes are superposed such that a leadthrough (4) extends through the entire stack,
(c) the first pane (1) is joined to the second pane (2) via the intermediate layer (3) by lamination.
(d) a clamping element (8) is clamped on between the leadthrough (4) and a lower edge (U) of the side window.

14. Use of a side window according to one of claims 1 through 12 as an openable side window of a motor vehicle, preferably a passenger car.

## Revendications

1. Vitre latérale pour un véhicule, avec un bord supérieur (O), un bord inférieur (U), un bord avant (V) et un bord arrière (H), comportant au moins une première plaque (1) et une seconde plaque (2), qui sont reliées entre elles par l'intermédiaire d'une couche intermédiaire thermoplastique (3),
dans laquelle la première plaque (1), la seconde plaque (2) ) et la couche intermédiaire thermoplastique (3) présentent chacune un trou (5, 6, 7)
et dans laquelle les trous (5, 6, 7) de la première plaque (1), de la seconde plaque (2) et de la couche intermédiaire thermoplastique (3) sont superposés de telle sorte qu'une traversée (4) pour la fixation d'un élément de serrage (8) s'étend à travers la totalité de la vitre latérale,
et dans laquelle le trou (5) de la première vitre (1) est plus grand que le trou (6) de la seconde vitre (2),
**caractérisé par le fait qu'**un élément de serrage (8) est serré entre la traversée (4) et le bord inférieur (U).

2. Vitre latérale selon la revendication 1, qui est cintrée de telle sorte que la surface (I) de la première plaque (1) tournée à l'opposé de la couche intermédiaire (3) est incurvée de manière convexe et la surface (IV) de la seconde plaque (2) tournée à l'opposé de la couche intermédiaire (3) est incurvée de manière concave.

3. Vitre latérale selon l'une des revendications 1 ou 2, dans laquelle le point du bord latéral du trou (6) de la seconde plaque (2) avec la distance la plus petite à partir du bord inférieur dépasse au-delà de celui de la première plaque (1).

4. Vitre latérale selon l'une des revendications 1 à 3, dans laquelle la surface du trou (5) de la première plaque (1) est d'au moins 10 % plus grande que la surface du trou (6) de la seconde plaque (2).

5. Vitre latérale selon l'une des revendications 1 à 4, dans laquelle la première plaque (1) est la plaque externe et la seconde plaque (2) est la plaque interne de la vitre latérale.

6. Vitre latérale selon la revendication 5, dans laquelle la première plaque (1) et la seconde plaque (2) sont disposées à fleur au niveau du bord supérieur (O) et le trou (5) de la première plaque (1) présente une distance à partir du bord inférieur (U) plus petite que le trou (6) de la seconde plaque (2).

7. Vitre latérale selon l'une des revendications 1 à 5, dans laquelle la première plaque (1) et la seconde plaque (2) sont disposées à fleur au niveau du bord inférieur (U) et les trous (5, 6) de la première plaque (1) et de la seconde plaque (2) présentent une distance sensiblement égale à partir du bord inférieur (U).

8. Vitre latérale selon l'une des revendications 1 à 7, dans laquelle le trou (7) de la couche intermédiaire (3) est plus grand que les trous (5, 6) dans la première plaque (1) et la seconde plaque (2).

9. Vitre latérale selon l'une des revendications 1 à 7, dans laquelle le trou (7) de la couche intermédiaire (3) est plus petit que les trous (5, 6) dans la première plaque (1) et la seconde plaque (2).

10. Vitre latérale selon l'une des revendications 1 à 9, dans laquelle la première plaque (1) et/ou la seconde plaque (2) présentent au niveau du trou respectif (5, 6) une contrainte de compression de bord d'au moins 20 MPa, de préférence d'au moins 30 MPa.

11. Vitre latérale selon l'une des revendications 1 à 10, dans laquelle la première plaque (1) et/ou la seconde plaque (2) présentent une tension de surface d'au moins 20 MPa, de préférence d'au moins 30 MPa, de manière particulièrement préférée d'au moins 40 MPa.

12. Vitre latérale selon l'une des revendications 1 à 11, dans laquelle les écailles au niveau des bords des trous (5, 6) de la première plaque (1) et de la seconde plaque (2) présentent une dimension d'au plus 750 µm, de préférence d'au plus 500 µm.

13. Procédé de fabrication d'une vitre latérale avec un trou de fixation continu, dans lequel :
(a) une première plaque (1), une seconde plaque (2) et une couche intermédiaire thermoplastique (3) sont dotées chacune d'un trou (5, 6, 7), le trou (5) de la première plaque (1) étant plus grand que le trou (6) de la seconde plaque (2) ;
(b) la première plaque (1), la couche intermédiaire thermoplastique (3) et la seconde plaque (2) sont disposées l'une sur l'autre à plat pour former un empilement, lesdits trous étant superposés de telle sorte qu'une traversée (4) s'étend à travers la totalité de l'empilement ;
(c) la première plaque (1) est reliée à la seconde plaque (2) par l'intermédiaire de la couche intermédiaire (3) par stratification ;
(d) un élément de serrage (8) est serré entre la traversée (4) et un bord inférieur (U) de la vitre latérale.

14. Utilisation d'une vitre latérale selon l'une des revendications 1 à 12 en tant que vitre latérale ouvrante d'un véhicule automobile, de préférence d'une voiture particulière.
